# EUROPEAN PATENT SPECIFICATION

(11) **EP 0 882 644 B1**
(45) Date of publication and mention of the grant of the patent: **16.04.2003**
(21) Application number: 98109950.0
(22) Date of filing: 01.06.1998
(51) Int. Cl.: B62J 6/04

(54) **Lighting device for a case-platform combination for vehicles of motorcycle type**
Beleuchtungseinrichtung eines Koffers für ein Motorrad
Dispositif d'éclairage d'un coffre pour motocyclette

(30) Priority: 30.05.1997 IT VE970025 U
(43) Date of publication of application: 09.12.1998
(73) Proprietor: Galter S.r.l., 35011 Sant'Andrea di Campodarsego (IT)
(72) Inventor: Schiavon, Francesco, 35011 Sant'Andrea di Campodarsego (IT)
(74) Representative: Piovesana, Paolo

(56) References cited:
- DE-U- 29 617 634
- FR-A- 2 709 465
- US-A- 3 927 727

## Description

This invention relates to a lighting device for a case-platform combination for vehicles of motorcycle type.

Cases are known arranged for removable hooking to a platform provided on the rear of a vehicle of motorcycle type. They generally comprise two half-shells of rigid plastic material hinged together along one side and provided with traditional fastener systems on the other side. For this hooking, the outer surface of that half-shell forming the base generally comprises two or more slotted holes in which corresponding mushroom-shaped appendices provided on the platform engage.

The upper half-shell comprises a band to which there are applied two embellishing reflex reflectors which help to indicate the presence of the vehicle during night travel.

An object of the invention is to provide a lighting device for a case-platform combination for vehicles of motorcycle type which better displays the braking command which in current motorcycles is displayed by the stop light mounted on the mudguard of the vehicle rear wheel.
This and further objects which will be apparent from the ensuing description are attained according to the invention by a lighting device for a case-platform as described in claim 1.

The invention is further clarified hereinafter with reference to the accompanying drawings, on which:

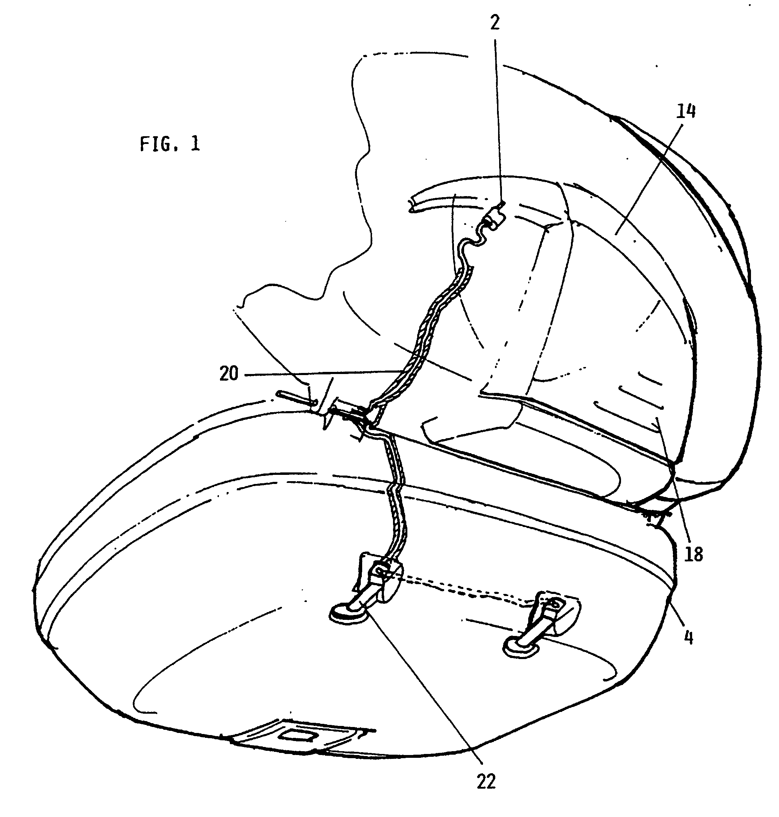

- Figure 1: is a perspective view from below of a case provided with the device of the invention,

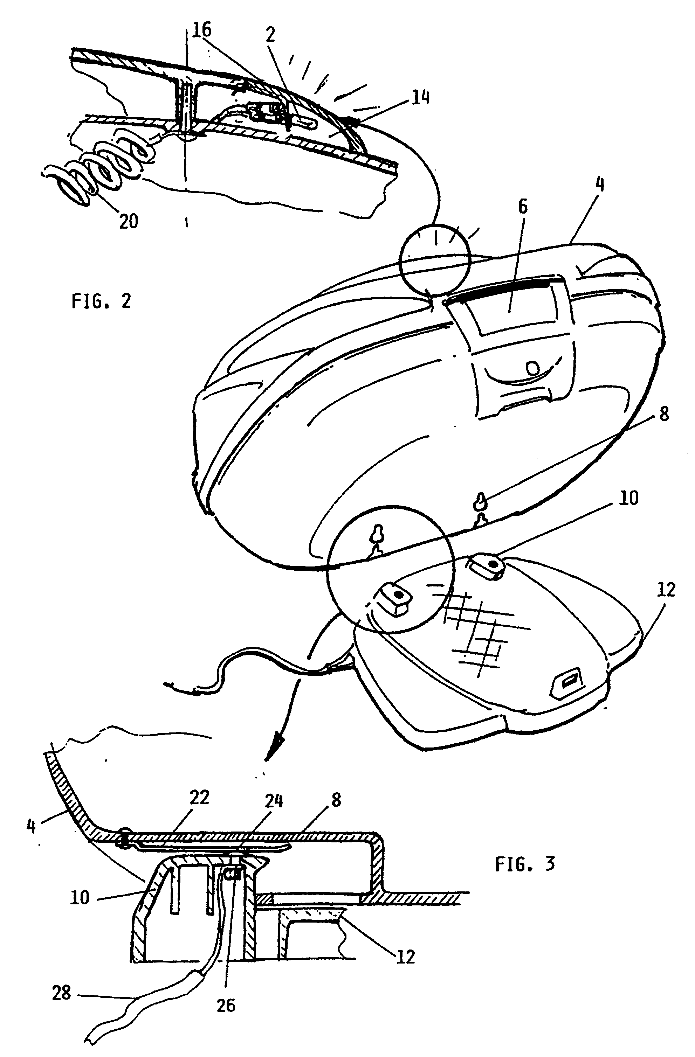

- Figure 2: is an exploded view of the case-platform combination provided with the device of the invention, and
- Figure 3: is a partial longitudinal section through the case when hooked to the platform.

As can be seen from the figures, the lighting device of the invention consists substantially of a light source 2 mounted on a case 4 constructed of rigid plastic material and consisting of two half-shells hinged together along one side and provided with traditional fastening elements 6 on the other side. The lower outer surface of the lower half-shell comprises two slotted holes 8 in which there engage corresponding mushroom-shaped appendices 10 projecting from a platform 12 mounted on the rear of the motorcycle-type vehicle.

The light source 2, which in the illustrated example is a lamp but could likewise be an LED, is housed in a seat 14 provided in the upper half-shell of the case in a position to the front of the luggage holder 18 and covered with a cover of methacrylate or other transparent material.

The light source is connected to an electric cable 20 extending within the case and provided at its other end with a blade 22 mounted on the base of the seat of one of the slotted holes 8.

Each mushroom-shaped appendix 10 is provided with a projecting metal contact 24, preferably of brass, to which there is connected a cable terminal 26 for an electric cable 28 connected in parallel with the electrical feed contacts for the vehicle stop light mounted on its rear mudguard.

The case is used in the traditional manner, enabling it to be instantly engaged with and disengaged from the platform by virtue of the engagement of the mushroom-shaped appendices with the slotted holes 8, however when the case is secured to the platform, the contact 24 and the blade 22 create electrical continuity between the light source 2 and the electrical stop-light power circuit, which consequently also powers the source 2.

In the illustrated example only one lamp is connected in parallel with the stop light, however more than one light source can be provided, each connected by its own circuit, separate from the other circuits, to the other lights provided on the rear of the vehicle.

## Claims

1. A lighting device for a case-platform combination for vehicles of motorcycle type, the case being arranged for removable hooking on the platform, **characterised by** comprising:
- at least one light source (2) to be mounted on the case (4) and provided with a first electrical contact element (22),
- a second contact element (24) provided on the platform (12) and connected electrically to the electrical power circuit of one of the lights provided on the vehicle rear mudguard,
said first contact element (22) making contact with said second contact element (24) when said case is hooked to said platform.

2. A device as claimed in claim 1, **characterised in that** the light source (2) is housed in a seat (14) and is covered with a cover (16) of plastic material.

3. A device as claimed in claim 1, **characterised in that** said first contact element (22) is mounted within a slotted hole (8) in which there engages a corresponding mushroom-shaped appendix on which said second contact element (24) is mounted.

4. A device as claimed in claim 1, **characterised in that** said light source is connected in parallel with the electrical power circuit of the stop light.

5. A device as claimed in claim 1, **characterised in that** said light source is a lamp.

## Patentansprüche

1. Beleuchtungseinrichtung für eine Behälter/Platform-Kombination für Fahrzeuge vom Motorradtyp, wobei der Behälter zum entfernbaren Anhaken an der Plattform ausgebildet ist, **dadurch gekennzeichnet, dass** sie umfasst:
- wenigstens eine Lichtquelle (2), die an dem Behälter (4) angebracht und mit einem ersen elektrischen Kontaktelement (22) versehen ist,
- ein zweites Kontaktelement (24), welches an der Plattform (12) vorgesehen und elektrisch mit dem elektrischen Stromkreis für die Lichter verbunden ist, welche am hinteren Schutzblech des Fahrzeugs vorgesehen sind, wobei
- das besagte erste Kontaktelement (22) einen Kontakt mit dem besagten zweiten Kontaktelement (24) herstellt, wenn der besagte Behälter der besagten Plattform angehakt wird.

2. Einrichtung nach Anspruch 1, **dadurch gekennzeichnet, dass** die Lichtquelle (2) in einem Sitz (14) aufgenommen und mit einer Abdeckung (16) aus Kunststoff abgedeckt ist.

3. Einrichtung nach Anspruch 1, **dadurch gekennzeichnet, dass** das besagte erste Kontaktelement (22) in einer Schlitzöffnung (8) angeordnet ist, in welcher es an einem entsprechenden pilzförmigen Fortsatz angreift, an dem das zweite Kontaktelement (24) angebracht ist.

4. Einrichtung nach Anspruch 1, **dadurch gekennzeichnet, dass** die besagte Lichtquelle parallel mit dem elektrischen Stomteil des Bremslichtes verbunden ist.

5. Einrichtung nach Anspruch 1, **dadurch gekennzeichnet, dass** die besagte Lichtquelle eine Lampe ist.

## Revendications

1. Un dispositif d'éclairage pour une combinaison de plateforme et caisse pour des véhicules de type motocyclette, la caisse étant agencée pour s'accrocher de manière amovible sur la plateforme, **caractérisé en ce qu'**il comprend :
- au moins une source de lumière (2) à monter dans la caisse (4) et munie d'un premier élément de contact électrique (22),
- un deuxième élément de contact (24) prévu sur la plateforme (12) et connecté électriquement au circuit d'alimentation électrique d'une des lumières prévue sur le garde-boue arrière du véhicule,
ledit premier élément de contact (22) étant en contact avec ledit deuxième élément de contact (24) lorsque ladite caisse est accrochée à ladite plateforme.

2. Un dispositif comme revendiqué dans la revendication 1, **caractérisé en ce que** la source de lumière (2) est logée dans un support (14) et est couverte par un couvercle (16) de matière plastique.

3. Un dispositif comme revendiqué dans la revendication 1, **caractérisé en ce que** ledit premier élément de contact (22) est monté à l'intérieur d'un trou entaillé (8) dans lequel s'engage un appendice correspondant en forme de champignon sur lequel ledit deuxième élément de contact (24) est monté.

4. Un dispositif comme revendiqué dans la revendication 1, **caractérisé en ce que** ladite source de lumière est connectée en parallèle avec le circuit d'alimentation électrique du feu stop.

5. Un dispositif comme revendiqué dans la revendication 1, **caractérisé en ce que** ladite source de lumière est une lampe.
